# EUROPÄISCHE PATENTSCHRIFT

(11) **EP 1 336 282 B1**
(45) Veröffentlichungstag und Bekanntmachung des Hinweises auf die Patenterteilung: **25.01.2006**
(21) Anmeldenummer: 01997923.6
(22) Anmeldetag: 15.11.2001
(51) Int. Cl.: H04L 12/56, H04L 29/06

(54) **VORRICHTUNG UND VERFAHREN ZUR VERKEHRSSTEUERUNG VON DATENÜBERTRAGUNGEN IN EINEM TCP/IP-DATENÜBERTRAGUNGSNETZ**
DEVICE AND METHOD FOR CONTROLLING DATA TRAFFIC IN A TCP/IP DATA TRANSMISSION NETWORK
DISPOSITIF ET PROCEDE POUR REGULER LE TRAFIC DE DONNEES DANS UN RESEAU DE TRANSMISSION DE DONNEES TCP/IP

(30) Priorität: 22.11.2000 DE 10057790
(43) Veröffentlichungstag der Anmeldung: 20.08.2003
(73) Patentinhaber: SIEMENS AKTIENGESELLSCHAFT, 80333 München (DE)
(72) Erfinder: CHARZINSKI, Joachim, 85764 Oberschleissheim (DE)
(86) Internationale Anmeldenummer: PCT/DE2001/004292
(87) Internationale Veröffentlichungsnummer: WO 2002/043331

(56) Entgegenhaltungen:
- EP-A- 0 647 081
- US-A- 5 426 640
- REARDON M: "TRAFFIC SHAPERS: IP IN CRUISE CONTROL" DATA COMMUNICATIONS, MCGRAW HILL. NEW YORK, US, Bd. 27, Nr. 13, 21. September 1998 (1998-09-21), Seiten 66,68-73, XP000785256 ISSN: 0363-6399

## Beschreibung

Verkehrssteuerung von Datenverkehr in TCP/IP-Datenübertragungsnetzen und ein in dieser Vorrichtung angewendetes Die vorliegende Erfindung betrifft eine Vorrichtung zur Verfahren zur Verkehrssteuerung von Datenverkehr in TCP/IP-Datenübertragungsnetzen.

Um eine gesicherte Dienstgüte (QOS, Quality of Service) in einem IP-basierten Datenübertragungsnetz bereitzustellen, müssen zwischen einem Teilnehmer und dem Datenübertragungsnetz zuerst einige Parameter zur Datenübertragung festgelegt werden; im einfachsten Fall wird die maximale Übertragungsgeschwindigkeit der Daten festgelegt.

Jedoch bietet das TCP-Übertragungsprotokoll, welches üblicherweise zur Datenübertragung über IP-basierten Datenübertragungsnetzen zur Anwendung kommt (z.B. zur Übertragung von Dateien und Internet-Datenübertragung), keine einfache Möglichkeit an, die maximale Datenübertragungsrate an die Parameter des Übertragungsweges anzupassen bzw. an die Übertragungsgeschwindigkeit der Daten, welche vom Sender (Endknoten) maximal übertragen werden darf.

Die Datenübertragungsrate wird nur durch folgende Faktoren begrenzt:

Zum einen wird die Datenübertragungsrate über die verfügbare Datenübertragungsrate im Datenübertragungsnetz bzw. dem Übertragungsweg begrenzt. Bei einer zu hohen Übertragungsgeschwindigkeit durch den Endknoten werden Datenpakete verworfen. Dabei findet durch TCP eine faire Verteilung der zur Verfügung stehenden Übertragungsgeschwindigkeit auf verschiedene Endknoten anhand der Paketverlustrate statt.

Weiterhin wird die maximale Übertragungsgeschwindigkeit dadurch bestimmt, welche Übertragungsgeschwindigkeit der empfangene Endknoten (zweiter Endknoten) verarbeiten kann. Das wird in einem Feld im TCP-Datenkopf (TCP-Header) von rücksendenden Datenpaketen angezeigt, welches eine maximale Paketgröße angibt.

Die maximale Übertragungsgeschwindigkeit wird auch durch die Übertragungsgeschwindigkeit bestimmt, die der sendende Endknoten bereitstellen kann, z.B. gegeben durch die Verarbeitungsgeschwindigkeit und/oder die Zugriffszeit auf eine Festplatte.

Diese Verfahren haben jedoch den Nachteil, daß die Übertragungsgeschwindigkeit nicht auf die Gegebenheiten des Übertragungsweges oder auf einen Verkehrsvertrag zwischen Benutzer und Netzbetreiber eingestellt werden kann. Eine Begrenzung der Übertragungsgeschwindigkeit erfolgt lediglich dadurch, daß bei Überlast im Übertragungsnetz Datenpakete verworfen werden.

Beim Stand der Technik wird das Problem der Anpassung der Übertragungsgeschwindigkeit an einen Verkehrsvertrag gelöst, indem Datenpakete verworfen werden, wenn eine bestimmte Übertragungsgeschwindigkeit für eine vorgegebene Zeit überschritten wird.

Werden Datenpakete verworfen, so erfolgt von dem Endknoten, für den die Datenpakete bestimmt sind (zweiter Endknoten), keine Bestätigung; bei Fehlen einer Bestätigung werden verworfene Datenpakete durch den ersten Endknoten erneut gesendet und es wird die Übertragungsgeschwindigkeit herabgesetzt. Dieser Mechanismus wird beispielsweise als sogenannter "Leaky Bucket"-Algorithmus, der aus der ATM-Datenübertragung bekannt ist, an variable Paketgrößen angepaßt in TCP/IP-Datenübertragungsnetzen angewendet.

Im Dokument [1] "TCP-Rate Control", Technischer Report, Rensselaer Polytechnic Institute, S. Karandikar et al., wird eine Methode beschrieben, bei der die Datenübertragungsrate durch das Manipulieren der Paketgröße und der Bestätigungspakete (Acknowledgement Pakets) beeinflußt wird. Jedoch erfordert dieses Verfahren ein hohes Maß an Rechenleistung, z.B. um die Checksumme im TCP-Paketkopf neu zu berechnen.

Das Dokument [2] K. Ramakrishnan et al., "A Proposal to add Congestion Notification (ECN) to IP", Internet RFC 2481, Januar 1999, schlägt ein Verfahren vor, bei dem eine Überlastsituation durch Setzen eines sogenannten ECN-Bits (Explicit Congestion Notify) im Paketkopf eines IP-Datenpaketes angezeigt wird. Dieses Verfahren hat jedoch den Nachteil, daß nur Überlastsituationen von Vermittlungsknoten im Datenübertragungsnetz angezeigt werden können. Es findet keine Regulierung der Übertragungsgeschwindigkeit eines bestimmten Endknotens auf einen voreingestellten Wert statt.

Aus der Druckschrift "Reardon M: "Traffic Shapes: IP in cruise control", Data Communications, McGraw Hill. New York, US, Bd. 27, Nr. 13, 21. September 1998 (1998-09-21), Seiten 66, 68-73, XP000785256, ISSN: 0363-6399" ist eine Vorrichtung zur Verkehrssteuerung in TCP/IP Datenübertragungsnetzen bekannt. Hier werden auch Übertragungsgeschwindigkeiten zwischen einem ersten Endknoten und einem zweiten Endknoten an eine festgelegte Übertragungsgeschwindigkeit angepasst.

Die Aufgabe der vorliegenden Erfindung ist somit, eine Vorrichtung zur Verkehrssteuerung von Datenverkehr in TCP/IP-Datenübertragungsnetzen und ein in dieser Vorrichtung angewendetes Verfahren zur Verkehrssteuerung bereitzustellen, bei denen eine Anpassung der Übertragungsgeschwindigkeit der Daten eines Senders (erster Endknoten) bei einer TCP/IP-Datenübertragung auf eine bestimmte vorgegebene Übertragungsgeschwindigkeit mit geringem Aufwand ermöglicht wird. Diese Anpassung soll dabei möglichst ohne Verlust von Daten erfolgen.

Diese Aufgabe wird durch eine Vorrichtung zur Verkehrssteuerung von Datenverkehr in TCP/IP-Datenübertragungsnetzen gemäß dem beigefügten Anspruch 1 und ein in dieser Vorrichtung angewendetes Verfahren zur Datenübertragung in TCP/IP-Datenübertragungsnetzen gemäß dem beigefügten Anspruch 11 gelöst.

Gemäß der vorliegenden Erfindung wird eine Vorrichtung und ein Verfahren zur Verkehrssteuerung in TCP/IP-Datenübertragungsnetzen bereitgestellt, bei denen eine Regulierung bzw. Anpassung der Übertragungsgeschwindigkeit von Daten, die von dem ersten Endknoten zu einem zweiten Endknoten versendet werden, ermöglicht wird.

Im folgenden soll der Begriff "Überlast" und "Überlastsituation" nicht für eine zu hohe Auslastung eines Netzknotens oder einer Übertragungsstrecke verstanden werden, sondern für das Überschreiten der in einem Verkehrsvertrag festgelegten Übertragungsgeschwindigkeit durch den betrachteten Daten- bzw. Paketverkehr.

Die Anpassung erfolgt durch die Vorrichtung zur Verkehrssteuerung dadurch, daß bei Erkennen einer Überlastsituation Signalisiermeldungen, die eine Überlastsituation anzeigen, an den ersten Endknoten versendet werden. Eine Überlastsituation wird erkannt, wenn die Daten von dem ersten Endknoten über einen bestimmten Zeitraum mit einer höheren Übertragungsgeschwindigkeit als die vorgegebene Übertragungsgeschwindigkeit versendet werden. Die vorgegebene Übertragungsgeschwindigkeit wird dabei z.B. aufgrund eines sogenannten Verkehrsvertrages festgelegt.

Die Übertragungsgeschwindigkeit ergibt sich dabei entweder aus einer Paketrate, d.h. einer Anzahl von Datenpaketen innerhalb einer bestimmten Zeit, oder einer Datenübertragungsrate, die sich beispielsweise aus einer mittleren Anzahl von übertragenen Bits innerhalb einer bestimmten Zeit ergeben.

Die Überlastsitutation wird von einer Detektiervorrichtung erkannt. Bei Erkennen einer Überlastsitutation werden durch eine Signalisiervorrichtung Signalisiermeldungen erzeugt und an den ersten Endknoten versendet.

Der Vorteil der vorliegenden Erfindung besteht darin, daß auf einfache Weise eine Regulierung der Datenrate des ersten Endknotens erfolgt, ohne Paketverluste in Kauf nehmen zu müssen. Weiterhin ist die Reaktionszeit bei Überlast wesentlich schneller als beim Stand der Technik, wo zur Überlastkontrolle eine Reaktion des zweiten Endknotens abgewartet wird.

Vorteilhafte Ausgestaltungen der vorliegenden Erfindung sind in den jeweiligen Unteransprüchen wiedergegeben.

Die Vorrichtung verfügt über einen physikalischen Zwischenspeicher, der nach dem FIFO-Prinzip (first in, first out) funktioniert und indem die vom ersten Endknoten empfangenen Datenpakete zwischengespeichert werden.

Anhand der Auslastung ("Füllstand") dieses Zwischenspeichers kann durch die Detektiervorrichtung eine Überlastsituation festgestellt werden. Bei einer bestimmten ersten Schwelle (beispielsweise 80 % der Kapazität des Zwischenspeichers) erkennt die Detektiervorrichtung eine Überlastsituation und es werden durch die Signalisiervorrichtung entsprechende Signalisiermeldungen erzeugt.

Eine Beendigung der Überlastsituation wird durch die Detektiervorrichtung erkannt, wenn beispielsweise eine zweite Schwelle, die kleiner als die erste Schwelle ist, unterschritten wird.

Der Zwischenspeicher kann auch als virtueller Zwischenspeicher implementiert sein. Dabei werden vom ersten Endknoten empfangene Daten ohne Zwischenspeicherung über das Datenübertragungsnetz an den zweiten Endknoten versendet. In dem virtuellen Zwischenspeicher werden lediglich Werte abgespeichert, die den Datendurchsatz anzeigen. Wird ein bestimmter Wert (erste Schwelle) überschritten, so wird durch die Detektiervorrichtung eine Überlastsituation erkannt. Bei Unterschreiten eines zweiten Wertes (zweite Schwelle) wird entsprechend die Beendigung der Überlastsituation erkannt.

Die Überlastsituation kann somit mittels des virtuellen Zwischenspeichers, genauso wie beim physikalischen Zwischenspeicher, anhand der ersten und der zweiten Schwelle durch die Detektiervorrichtung ermittelt werden.

Eine weitere Möglichkeit, eine Überlastsituation zu ermitteln, besteht in der Erkennung von Daten- bzw. Paketverlusten. Werden über einen längeren Zeitraum mehr Daten von dem ersten Endknoten an die Vorrichtung zur Verkehrssteuerung versendet, als von der ersten Sendevorrichtung weiter versendet werden können, so können Daten verworfen werden (Daten- bzw. Paketverlust).

Werden in einem TCP/IP-Datenübertragungsnetz vom ersten Endknoten zum zweiten Endknoten Datenpakete übertragen, so werden bei erfolgreicher Datenübertragung vom zweiten Endknoten in Antwort darauf Datenpakete zur Bestätigung (Acknowledgement) an den ersten Endknoten versendet. Die Signalisiervorrichtung erkennt diese Datenpakete, die eine Bestätigung erhalten, und signalisiert in diesen Datenpaketen gegebenenfalls die Überlastsituation.

Denkbar wäre auch, daß die Signalisiervorrichtung im Falle einer Überlastsituation eigene Datenpakete, die diese Überlastsituation anzeigen, erzeugt und an den ersten Endknoten versendet.

Zur Signalisierung einer Überlastsituation kann von der Signalisiervorrichtung ein bestimmtes Bit im Paketkopf der IP-Datenpakete gesetzt werden. So eignet sich in besonders vorteilhafter Weise das ECN-Bit (s. auch Dokument [2]) im TOS-Feld (Type of Service) des IP-Paketkopfes. Bei Verwendung dieses Bits muß die Checksumme im TCP-Paketkopf nicht neu berechnet werden. Denkbar wäre jedoch auch die Verwendung von anderen (bisher ungenutzten) Bits im IP- bzw. TCP-Paketkopf.

Weiterhin wäre denkbar, daß die erfindungsgemäße Vorrichtung zur Verkehrssteuerung aufgrund der Reaktionen auf die Signalisiermeldungen erkennt, ob der erste Endknoten diese Signalisiermeldungen, die eine Überlastsituation anzeigen, als solche erkennt. Erkennt der erste Endknoten diese Signalisiermeldungen nicht (keine Reaktion auf Überlastsituation), so erfolgt die Regulierung der Übertragungsgeschwindigkeit des ersten Endknotens wie bisher aufgrund der Paketverluste. Um die Reaktionszeit in diesem Fall zu verkürzen, könnte die Vorrichtung zur Verkehrssteuerung beispielsweise die erste Schwelle herabsetzen; diese Schwelle dient in dem Fall als Markierung, ab der Datenpakete verworfen werden.

Die erfindungsgemäße Vorrichtung zur Verkehrssteuerung wird in der Regel an der Schnittstelle zwischen dem Teilnehmer, der den ersten Endknoten (Host) betreibt, und dem Datenübertragungsnetz angesiedelt. Vorteilhafterweise ist die Vorrichtung Bestandteil des ersten Endknotens.

Die vorliegende Erfindung wird nachfolgend anhand bevorzugter Ausführungsbeispiele unter Bezug auf die beigefügten Zeichnungen näher erläutert, in denen zeigen:
Fig. 1 eine schematische Darstellung der Vorrichtung zur Verkehrssteuerung gemäß dem Stand der Technik,
Fig. 2 eine schematische Darstellung der Vorrichtung zur Verkehrssteuerung gemäß der vorliegenden Erfindung in einem TCP/IP-Datenübertragungsnetz, und
Fig. 3 eine Darstellung der Funktionsweise zur Verkehrssteuerung.

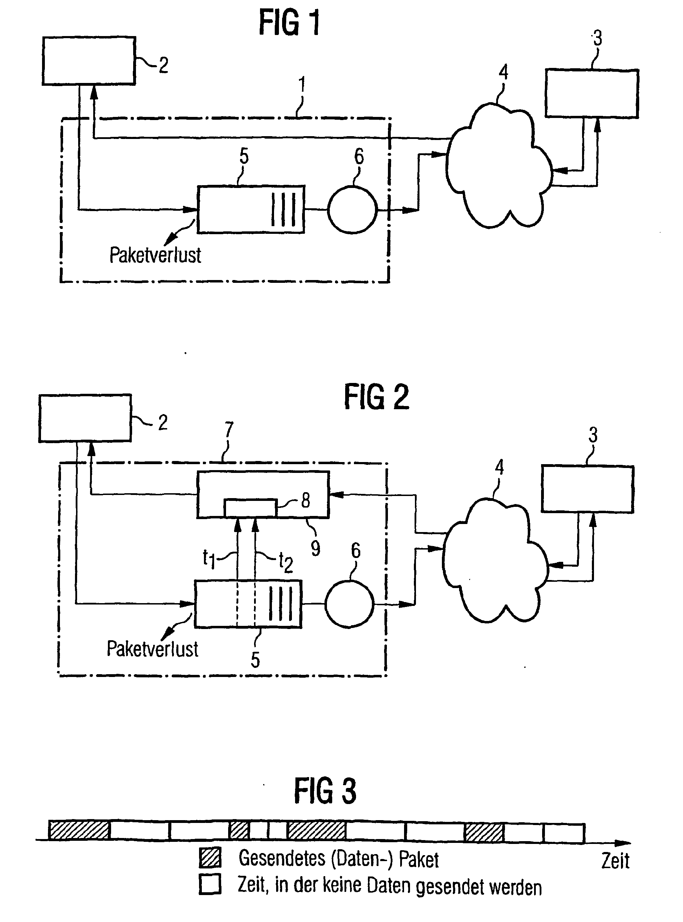

Fig. 1 zeigt eine Darstellung einer Vorrichtung zur Verkehrssteuerung 1 nach dem Stand der Technik. In der Literatur wird diese Vorrichtung häufig als "Traffic Shaper" bezeichnet.

Werden Daten von einem ersten Endknoten 2 (Host) über das Datenübertragungsnetz 4 zu einem zweiten Endknoten 3 gesendet, so wird der Datenverkehr in diese Richtung durch den Traffic Shaper 1 "geformt", d.h. sie werden an bestimmte Übertragungsparameter (z.B. die maximal zulässige Übertragungsgeschwindigkeit der Daten) angepaßt, die z.B. mittels eines sogenannten Verkehrsvertrages festgelegt werden. Daten, die vom ersten Endknoten 2 gesendet werden, werden im Zwischenspeicher 5 vom Traffic Shaper 1 bis zum weiteren Versenden zwischengespeichert. Die Sendevorrichtung 6 versendet die zwischengespeicherten Daten mit einer vorgegebenen Übertragungsgeschwindigkeit über das Datenübertragungsnetz 4 an einen zweiten Endknoten 3. Das Anpassen der Übertragungsgeschwindigkeit wird noch anhand von Fig. 3 näher erläutert. Ist die Übertragungsgeschwindigkeit durch den ersten Endknoten 2 zu groß, so "füllt" sich der Zwischenspeicher schneller, als Daten übertragen werden, bis hin zum Paketverlust. Dieser Mechanismus ist beispielsweise in der ATM-Übertragungstechnik als "Leaky Bucket" bekannt.

Beim Stand der Technik paßt der erste Endknoten 2 seine Übertragungsgeschwindigkeit an die zur Verfügung stehende Übertragungsgeschwindigkeit an, indem er die Übertragungsgeschwindigkeit der Daten schrittweise erhöht. Für jedes durch den zweiten Endknoten 3 empfangene Datenpaket versendet dieser Endknoten 3 gemäß dem TCP-Protokoll ein Datenpaket mit einer Bestätigung (Acknowledgement).

Sendet der erste Endknoten 2 Daten mit einer zu hohen Übertragungsgeschwindigkeit über das Datenübertragungsnetz, so füllt sich der Zwischenspeicher 5 mit Daten, bis schließlich Pakete verloren gehen, weil die Kapazität des Zwischenspeichers 5 erschöpft ist.

Gehen Datenpakete verloren, so empfängt der erste Endknoten 2 für diese Datenpakete keine Bestätigung durch den zweiten Endknoten 3. Die Folge davon ist, daß der erste Endknoten 2 die verlorengegangenen Datenpakete erneut versendet und daß dieser Endknoten 2 daraufhin seine Übertragungsgeschwindigkeit drosselt.

Diese Art der Anpassung der Übertragungsgeschwindigkeit der Daten hat den Nachteil, daß sie relativ langsam ist. Die Reaktion erfolgt erst nach einer bestimmten Zeit, nach der keine Bestätigung empfangen wird. Außerdem wird dabei der Verlust von Datenpaketen in Kauf genommen.

Die vorliegende Erfindung, wie sie in Fig. 2 schematisch dargestellt ist, schafft hier Abhilfe.

Der Traffic Shaper 1 nach dem Stand der Technik aus Fig. 1 wurde hier zum erfindungsgemäßen Traffic Shaper 7 erweitert, der zusätzlich eine Detektiervorrichtung 8 und eine Signalisiervorrichtung 9 aufweist.

Ist die Übertragungsgeschwindigkeit, mit der der erste Endknoten 2 Daten versendet, größer als die voreingestellte Übertragungsgeschwindigkeit der Sendevorrichtung 6 (sogenannte Shaping Rate), so füllt sich der Zwischenspeicher 5 immer mehr.

Um einen Paketverlust möglichst zu vermeiden, erkennt die Detektiervorrichtung 8, wenn der Zwischenspeicher 5 bis zu einer bestimmten ersten Schwelle t₁ (Threshold) ausgelastet ist. Bei Überschreiten der ersten Schwelle t₁ wird durch die Detektiervorrichtung 8 eine Überlastsituation erkannt und der Signalisiervorrichtung 9 signalisiert.

Die Signalisiervorrichtung 9 setzt in Datenpaketen, die von dem zweiten Endknoten 3 als Bestätigung für Datenpakete, die der zweite Endknoten 3 vom ersten Endknoten 2 empfangen hat, versendet wurden, eine entsprechende Markierung, daß eine Überlastsituation besteht; diese Markierung kann beispielsweise das ECN-Bit im TOS-Feld des IP-Paketkopfes sein. Weiterhin versendet die Signalisiervorrichtung 7 das modifizierte Datenpaket an den ersten Endknoten.

Der erste Endknoten 2 erkennt das gesetzte ECN-Bit und reduziert daraufhin die Übertragungsgeschwindigkeit um ein vorgegebenes Maß.

Durch das Setzen und Erkennen der ersten Schwelle, die unterhalb der maximalen Speicherkapazität des Zwischenspeichers liegt, wird erreicht, daß bis zur Reaktion des ersten Endknotens 2 auf eine Überlastsituation keine Datenpakete verloren gehen.

Die Reduzierung der Übertragungsgeschwindigkeit kann dabei erfolgen, indem entweder die Bitrate oder die Paketrate herabgesetzt wird. Ein Herabsetzen der Paketrate hat über einen Zeitverlauf eine Herabsetzung der Bitrate zur Folge.

Die Detektiervorrichtung 8 erkennt eine Beendigung der Überlastsituation, wenn die zweite Schwelle t₂, die kleiner ist als die erste Schwelle t₁, des Zwischenspeichers 5 unterschritten wird.

Die Signalisiervorrichtung 9 hat zudem die Aufgabe, die Datenpakete, die eine Bestätigung von dem zweiten Endknoten enthalten, zu klassifizieren. Das bedeutet, daß die Signalisierung einer Überlastsituation gegebenenfalls nur für bestimmte Anwendungen eingefügt werden darf, während die Übertragungsgeschwindigkeit anderer Anwendungen nach Möglichkeit nicht beeinträchtigt werden darf.

Reagiert der erste Endknoten 2 nicht auf die Signalisiermeldungen, die eine Überlastsituation anzeigen, so erfolgt die Regulierung der Datenübertragungsrate mittels Paketverlusten nach dem Stand der Technik. Wird dies durch den erfindungsgemäßen Traffic Shaper 7 erkannt, so könnte die erste Schwelle t₁ automatisch herabgesetzt werden, um die Reaktionszeit auf die Überlastsituation zu verkürzen.

Die vorliegende Erfindung wurde so dargestellt, daß pro Endknoten ein Zwischenspeicher 5 existiert. Denkbar wäre auch, für jede TCP-Verbindung (d.h. für verschiedene Anwendungen) jeweils einen Zwischenspeicher vorzusehen; das bedeutet, daß mehrere Zwischenspeicher für einen Endknoten existieren. Die ECN-Bits werden in jedem Datenpaket an den ersten Endknoten, das eine Bestätigung für diesen Endknoten enthält, eingefügt. Die ECN-Bits können auch in gewissen zeitabständen zufällig in die Datenpakete, die als Bestätigung für den ersten Endknoten dienen, eingefügt werden

Der erfindungsgemäße Traffic Shaper 7 kann im ersten Endknoten 2 integriert werden und zusätzlich zu einem Traffic Shaper 1 nach dem Stand der Technik, der den Zugang zum Datenübertragungsnetz 4 bildet, eingesetzt werden.

Die Einstellung der Übertragungsgeschwindigkeit, mit der die Sendevorrichtung 6 die Daten über das Datenübertragungsnetz 4 überträgt, kann beispielsweise mittels der sogenannten RSVP-Signalisierung (Resource Reservation Protocol) eingestellt werden.

Anhand von Fig. 3 wird nachfolgend die Funktionsweise der Sendevorrichtung 6 näher erläutert.

Die Aufgabe der Sendevorrichtung 6 ist es, die Übertragungsgeschwindigkeit, mit der Daten über das Datenübertragungsnetz übertragen werden, an eine bestimmte, vorher festgelegte Übertragungsgeschwindigkeit anzupassen. Diese voreingestellte Übertragungsgeschwindigkeit wird beispielsweise durch einen sogenannten Verkehrsvertrag festgelegt.

Im Beispiel von Fig. 3 steht dem ersten Endknoten als maximale Übertragungsgeschwindigkeit ein Drittel der maximalen Übertragungskapazität des Übertragungsweges (Link) zur Verfügung. Dementsprechend wird durch die Sendevorrichtung ein Datenpaket gesendet und zum nächsten Datenpaket eine Sendepause eingelegt. Die Sendepause ist in dem Beispiel dabei zeitlich doppelt so lang, wie das Senden des letzten Datenpaketes in Anspruch genommen hat.

## Patentansprüche

1. Vorrichtung zur Verkehrssteuerung (7) in TCP/ IP-Datenübertragungsnetzen zum Anpassen der Übertragungsgeschwindigkeit, mit der Daten von einen ersten Endknoten (2) über ein Datenübertragungsnetz (4) an einen zweiten Endknoten (3) versendet werden, an eine festgelegte Übertragungsgeschwindigkeit, mit einer Sendevorrichtung (6), die die vom ersten Endknoten (2) empfangenen Daten maximal mit der festgelegten Übertragungsgeschwindigkeit über das Datenübertragungsnetz (4) an den zweiten Endknoten (3) versendet, derart ausgestaltet ,
dass eine Detektiervorrichtung (8) vorgesehen ist, die das Überschreiten der in einem Verkehrsvertrag festgelegten Übertragungsgeschwindigkeit aufgrund der Tatsache erkennt, dass die Daten von dem ersten Endknoten (2) über einen bestimmten Zeitraum mit einer höheren Übertragungsgeschwindigkeit als die festgelegte Übertragungsgeschwindigkeit versendet werden, und
dass eine Signalisiervorrichtung (9) vorgesehen ist, die bei Vorliegen des Überschreitens der in dem Verkehrsvertrag festgelegten Übertragungsgeschwindigkeit entsprechende Signalisiermeldungen erzeugt, **dadurch gekennzeichnet, dass** die Signalisiervorrichtung erkennt, ob der erste Endknoten (2) die Signalisiermeldungen verarbeiten kann, in Abhängigkeit davon eine erste Schwelle (t₁) einstellt und die Signalisiermeldungen an den ersten Endknoten (2) versendet.

2. Vorrichtung (7) gemäß Anspruch 1,
**dadurch gekennzeichnet,**
**dass** ein physikalischer Zwischenspeicher (5) vorgesehen ist, der die von dem ersten Endknoten (2) empfangenen Daten bis zum weiteren Versenden zwischenspeichert.

3. Vorrichtung (7) gemäß Anspruch 1,
**dadurch gekennzeichnet,**
**dass** ein virtueller Zwischenspeicher vorgesehen ist, der Werte zwischenspeichert, die den aktuellen Datendurchsatz anzeigen.

4. Vorrichtung (7) gemäß Anspruch 1, 2 oder 3,
**dadurch gekennzeichnet,**
**dass** die Detektiervorrichtung (8) das Überschreiten der in dem Verkehrsvertrag festgelegten Übertragungsgeschwindigkeit anhand des Überschreitens der ersten Schwelle (t₁) bezüglich der in dem physikalischen Zwischenspeicher (5) gespeicherten Datenmenge oder des in dem virtuellen Zwischenspeicher gespeicherten Werts erkennt.

5. Vorrichtung (7) gemäß Anspruch 1,
**dadurch gekennzeichnet,**
**dass** die Detektiervorrichtung (8) ein Unterschreiten einer zweiten Schwelle (t₂), die kleiner als die erste Schwelle (t₁) ist, als Beendigung des Überschreitens der in dem Verkehrsvertrag festgelegten Übertragungsgeschwindigkeit erkennt.

6. Vorrichtung (7) gemäß einem der Ansprüche 1 bis 5,
**dadurch gekennzeichnet,**
**dass** die Detektiervorrichtung (8) das Überschreiten der in dem Verkehrsvertrag festgelegten Übertragungsgeschwindigkeit anhand von Datenverlusten erkennt.

7. Vorrichtung (7) gemäß einem der Ansprüche 1 bis 6,
**dadurch gekennzeichnet,**
**dass** die Signalisiervorrichtung (9) die Signalisiermeldungen in Datenpakete einfügt, die vom zweiten Endknoten (3) an den ersten Endknoten (2) versendet werden, wobei diese Datenpakete eine Bestätigung über vom ersten Endknoten (2) empfangenen Daten enthalten.

8. Vorrichtung (7) gemäß einem der Ansprüche 1 bis 7,
**dadurch gekennzeichnet,**
**dass** die Signalisiervorrichtung (9) die Signalisiermeldungen in eigens erzeugten Datenpaketen an den ersten Endknoten (2) versendet.

9. Vorrichtung (7) gemäß Anspruch 7 oder 8,
**dadurch gekennzeichnet,**
**dass** die Signalisiervorrichtung (9) eine Überlast mittels eines bestimmten gesetzten Bits im Paketkopf der Datenpakete signalisiert.

10. Vorrichtung (7) gemäß einem der Ansprüche 1 bis 9,
**dadurch gekennzeichnet,**
**dass** die Signalisiervorrichtung (9) Bestandteil des ersten Endknotens (2) ist.

11. Verfahren zur Verkehrssteuerung in TCP/ IP-Datenübertragungsnetzen zum Anpassen der Übertragungsgeschwindigkeit, mit der Daten von einen ersten Endknoten (2) über ein Datenübertragungsnetz (4) an einen zweiten Endknoten (3) versendet werden, an eine festgelegte Übertragungsgeschwindigkeit, wobei die vom ersten Endknoten (2) empfangenen Daten maximal mit der festgelegten Übertragungsgeschwindigkeit über das Datenübertragungsnetz (4) an den zweiten Endknoten (3) versendet werden, mit den Schritten:
Erkennen des Überschreitens einer in dem Verkehrsvertrag festgelegten Übertragungsgeschwindigkeit aufgrund der Tatsache, dass die Daten von dem ersten Endknoten (2) über einen bestimmten Zeitraum mit einer höheren Übertragungsgeschwindigkeit als die vorgegebene Übertragungsgeschwindigkeit versendet werden, und
Erzeugen von entsprechenden Signalisiermeldungen bei Vorliegen des Überschreitens der in dem Verkehrsvertrag festgelegten Übertragungsgeschwindigkeit, **gekennzeichnet durch** die Schritte: Erkennen ob der erste Endknoten (2) die Signalisiermeldungen verarbeiten kann, Einstellen einer ersten Schwelle (t₁) in Abhängigkeit vom Ergebnis und Versenden der Signalisiermeldungen an den ersten Endknoten (2).

12. Verfahren gemäß Anspruch 11,
**dadurch gekennzeichnet,**
**dass** die vom ersten Endknoten (2) empfangenen Daten bis zum weiteren Versenden zwischengespeichert werden.

13. Verfahren gemäß Anspruch 11,
**dadurch gekennzeichnet,**
**dass** Werte zwischengespeichert werden, die den aktuellen Datendurchsatz anzeigen.

14. Verfahren gemäß Anspruch 11, 12 oder 13,
**dadurch gekennzeichnet,**
**dass** das Überschreiten der in dem Verkehrsvertrag festgelegten Übertragungsgeschwindigkeit anhand des Überschreitens der ersten Schwelle (t₁) bezüglich der zwischengespeicherten Datenmenge oder des zwischengespeicherten Werts erkannt wird.

15. Verfahren gemäß Anspruch 11,
**dadurch gekennzeichnet,**
**dass** ein Unterschreiten einer zweiten Schwelle (t₂), die kleiner ist als die erste Schwelle (t₁), als Beendigung des Überschreitens der in dem Verkehrsvertrag festgelegten Übertragungsgeschwindigkeit erkannt wird.

16. Verfahren gemäß einem der Ansprüche 11 bis 15,
**dadurch gekennzeichnet,**
**dass** das Überschreiten der in dem Verkehrsvertrag festgelegten Übertragungsgeschwindigkeit anhand von Datenverlusten erkannt wird.

17. Verfahren gemäß einem der Ansprüche 11 bis 16,
**dadurch gekennzeichnet,**
**dass** die Signalisiermeldungen in Datenpakete eingefügt werden, die vom zweiten Endknoten (3) an den ersten Endknoten (2) versendet werden, wobei diese Datenpakete eine Bestätigung über vom ersten Endknoten (2) empfangene Daten enthalten.

18. Verfahren gemäß einem der Ansprüche 11 bis 17,
**dadurch gekennzeichnet,**
**dass** die Signalisiermeldungen in eigens erzeugten Datenpaketen an den ersten Endknoten (2) versendet.

19. Verfahren gemäß Anspruch 17 oder 18,
**dadurch gekennzeichnet,**
**dass** das Überschreiten der in dem Verkehrsvertrag festgelegten Übertragungsgeschwindigkeit mittels eines bestimmten gesetzten Bits im Paketkopf der Datenpakete signalisiert wird.

20. Verfahren gemäß einem der Ansprüche 11 bis 19,
**dadurch gekennzeichnet,**
**dass** es im ersten Endknoten (2) angewendet wird.

## Claims

1. Apparatus for traffic control (7) in TCP/IP data transmission networks for matching the transmission speed at which data is transmitted from a first end node (2) via a transmission network (4) to a second end node (3) to a defined transmission speed, having
a transmission apparatus (6) which transmits the data which is received from the first end node (2) via the data transmission network (4) to the second end node (3) at most at the predetermined transmission speed, designed in such a way
that a detection apparatus (8) is provided which identifies the exceeding of the transmission speed which is defined in a traffic contract in that the data is transmitted from the first end node (2) over a specific period of time at a higher transmission speed than the defined transmission speed, and
that a signalling apparatus (9) is provided, which produces appropriate signalling messages when the transmission speed which is defined in the traffic contract is exceeded, **characterized in that** the signalling apparatus identifies whether the first end node (2) can process the signalling messages, sets a first threshold (t₁) as a function thereof and transmits the signalling messages to the first end node (2).

2. Apparatus (7) according to Claim 1,
**characterized in that**
a physical buffer store (5), is provided which temporarily stores the data which is received from the first end node (2) until it is transmitted further.

3. Apparatus (7) according to Claim 1,
**characterized in that**
a virtual buffer store is provided, which temporarily stores values which indicate the current data throughput rate.

4. Apparatus (7) according to Claim 1, 2 or 3,
**characterized**
**in that** the detection apparatus (8) identifies the exceeding of the transmission speed which is defined in the traffic contract on the basis of the first threshold (t₁) being exceeded with respect to the amount of data which is stored in the physical buffer store (5), or with respect to the value which is stored in the virtual buffer store.

5. Apparatus (7) according to Claim 1,
**characterized**
**in that** the detection apparatus (8) identifies the undershooting of a second threshold (t₂), which is lower than the first threshold (t₁), as the end of the exceeding of the transmission speed which is defined in the traffic contract.

6. Apparatus (7) according to one of Claims 1 to 5,
**characterized**
**in that** the detection apparatus (8) identifies the exceeding of the transmission speed which is defined in the traffic contract on the basis of data losses.

7. Apparatus (7) according to one of Claims 1 to 6,
**characterized**
**in that** the signalling apparatus (9) inserts the signalling messages into data packets which are transmitted from the second end node (3) to the first end node (2), with these data packets including acknowledgement of the data which is received from the first end node (2).

8. Apparatus (7) according to one of Claims 1 to 7,
**characterized**
**in that** the signalling apparatus (9) transmits the signalling messages to the first end node (2) in specially produced data packets.

9. Apparatus (7) according to Claim 7 or 8,
**characterized**
**in that** the signalling apparatus (9) signals an overload by means of a specific set bit in the packet header of the data packets.

10. Apparatus (7) according to one of Claims 1 to 9,
**characterized**
**in that** the signalling apparatus (9) is a component of the first end node (2).

11. Method for traffic control in TCP/IP data transmission networks for matching the transmission speed at which data is transmitted from a first end node (2) via a transmission network (4) to a second end node (3) to a defined transmission speed, with the data which is received from the first end node (2) being transmitted via the data transmission network (4) to the second end node (3) at most at the defined transmission speed, having the following steps:
identification of the exceeding of the transmission speed which is defined in the traffic contract in that the data is transmitted from the first end node (2) over a specific period of time at a higher transmission speed than the predetermined transmission speed, and
production of appropriate signalling messages when the transmission speed which is defined in the traffic contract is exceeded, **characterized by** the following steps:
identification of whether the first end node (2) can process the signalling messages, setting of a first threshold (t₁) as a function of the result and transmission of the signalling messages to the first end node (2).

12. Method according to Claim 11,
**characterized**
**in that** the data which is received from the first end node (2) is temporarily stored until it is transmitted further.

13. Method according to Claim 11,
**characterized**
**in that** values are temporarily stored which indicate the current data throughput rate.

14. Method according to Claim 11, 12 or 13,
**characterized**
**in that** the exceeding of the transmission speed which is defined in the traffic contract is identified on the basis of the first threshold (t₁) being exceeded with respect to the buffer-stored amount of data or with respect to the buffer-stored value.

15. Method according to Claim 11,
**characterized**
**in that** the undershooting of a second threshold (t₂), which is lower than the first threshold (t₁), is identified as the end of the exceeding of the transmission speed which is defined in the traffic contract.

16. Method according to one of Claims 11 to 15,
**characterized**
**in that** the exceeding of the transmission speed which is defined in the traffic contract is identified on the basis of data losses.

17. Method according to one of Claims 11 to 16,
**characterized**
**in that** the signalling messages are inserted into data packets which are transmitted from the second end node (3) to the first end node (2), with these data packets including acknowledgement of the data which is received from the first end node (2).

18. Method according to one of Claims 11 to 17,
**characterized**
**in that** the signalling messages are transmitted to the first end node (2) in specially produced data packets.

19. Method according to Claim 17 or 18,
**characterized**
**in that** the exceeding of the transmission speed which is defined in the traffic contract is signalled by means of a specific set bit in the packet header of the data packets.

20. Method according to one of Claims 11 to 19,
**characterized**
**in that** Method is used in the first end node (2).

## Revendications

1. Dispositif de régulation de trafic (7) dans des réseaux de transmission de données TCP/IP pour adapter la vitesse de transmission, utilisée pour expédier des données d'un premier noeud final (2) via un réseau de transmission de données (4) à un second noeud final (3), à une vitesse de transmission fixée, comprenant un dispositif d'émission (6) qui expédie les données reçues du premier noeud final (2), au maximum avec la vitesse de transmission fixée, via le réseau de transmission de données (4) au second noeud final (3), et configuré de telle manière
qu'un dispositif de détection (8) est prévu, qui détecte le dépassement vers le haut de la vitesse de transmission fixée dans un contrat de trafic par le fait que les données sont expédiées du premier noeud final (2), pendant un laps de temps défini, avec une vitesse de transmission plus élevée que la vitesse de transmission fixée, et
qu'un dispositif de signalisation (9) est prévu, qui, lorsqu'il y a dépassement vers le haut de la vitesse de transmission fixée dans le contrat de trafic, produit des messages de signalisation correspondants,
**caractérisé en ce que** le dispositif de signalisation détecte si le premier noeud final (2) est à même de traiter les messages de signalisation, règle en fonction de cela un premier seuil (t₁) et expédie les messages de signalisation au premier noeud final (2).

2. Dispositif (7) selon la revendication 1,
**caractérisé en ce qu'**une mémoire intermédiaire physique (5) est prévue, laquelle enregistre temporairement les données reçues du premier noeud final (2), jusqu'à l'expédition ultérieure.

3. Dispositif (7) selon la revendication 1,
**caractérisé en ce qu'**une mémoire intermédiaire virtuelle est prévue, laquelle enregistre temporairement des valeurs qui indiquent le débit de données actuel.

4. Dispositif (7) selon la revendication 1, 2 ou 3,
**caractérisé en ce que** le dispositif de détection (8) détecte le dépassement vers le haut de la vitesse de transmission fixée dans le contrat de trafic à l'aide du dépassement vers le haut du premier seuil (t₁) concernant la quantité de données enregistrée dans la mémoire intermédiaire physique (5) ou la valeur enregistrée dans la mémoire intermédiaire virtuelle.

5. Dispositif (7) selon la revendication 1,
**caractérisé en ce que** le dispositif de détection (8) détecte un dépassement vers le bas d'un second seuil (t₂), inférieur au premier seuil (t₁), comme fin du dépassement vers le haut de la vitesse de transmission fixée dans le contrat de trafic.

6. Dispositif (7) selon l'une des revendications 1 à 5,
**caractérisé en ce que** le dispositif de détection (8) détecte le dépassement vers le haut de la vitesse de transmission fixée dans le contrat de trafic à l'aide de pertes de données.

7. Dispositif (7) selon l'une des revendications 1 à 6,
**caractérisé en ce que** le dispositif de signalisation (9) insère les messages de signalisation dans des paquets de données qui sont expédiés du second noeud final (3) au premier noeud final (2), ces paquets de données contenant une confirmation concernant les données reçues du premier noeud final (2).

8. Dispositif (7) selon l'une des revendications 1 à 7,
**caractérisé en ce que** le dispositif de signalisation (9) expédie les messages de signalisation au premier noeud final (2) dans des paquets de données spécialement créés.

9. Dispositif (7) selon la revendication 7 ou 8,
**caractérisé en ce que** le dispositif de signalisation (9) signale une surcharge au moyen d'un bit spécifique placé dans l'en-tête de paquet des paquets de données.

10. Dispositif (7) selon l'une des revendications 1 à 9,
**caractérisé en ce que** le dispositif de signalisation (9) fait partie du premier noeud final (2).

11. Procédé de régulation de trafic dans des réseaux de transmission de données TCP/IP pour adapter la vitesse de transmission, utilisée pour expédier des données d'un premier noeud final (2) via un réseau de transmission de données (4) à un second noeud final (3), à une vitesse de transmission fixée, les données reçues du premier noeud final (2) étant expédiées, au maximum avec la vitesse de transmission fixée, via le réseau de transmission de données (4) au second noeud final (3), comprenant les étapes :
détecter le dépassement vers le haut d'une vitesse de transmission fixée dans le contrat de trafic par le fait que les données sont expédiées du premier noeud final (2), pendant un laps de temps défini, avec une vitesse de transmission plus élevée que la vitesse de transmission fixée, et
produire des messages de signalisation correspondants lorsqu'il y a dépassement vers le haut de la vitesse de transmission fixée dans le contrat de trafic,
**caractérisé par** les étapes :
détecter si le premier noeud final (2) est à même de traiter les messages de signalisation, régler un premier seuil (t₁) en fonction du résultat et expédier les messages de signalisation au premier noeud final (2).

12. Procédé selon la revendication 11,
**caractérisé en ce que** les données reçues du premier noeud final (2) sont enregistrées temporairement jusqu'à l'expédition ultérieure.

13. Procédé selon la revendication 11,
**caractérisé en ce que** des valeurs sont enregistrées temporairement, qui indiquent le débit de données actuel.

14. Procédé selon la revendication 11, 12 ou 13,
**caractérisé en ce que** le dépassement vers le haut de la vitesse de transmission fixée dans le contrat de trafic est détecté à l'aide du dépassement vers le haut du premier seuil (t₁) concernant la quantité de données enregistrée temporairement ou la valeur enregistrée temporairement.

15. Procédé selon la revendication 11,
**caractérisé en ce qu'**un dépassement vers le bas d'un second seuil (t₂), inférieur au premier seuil (t₁), est détecté comme fin du dépassement vers le haut de la vitesse de transmission fixée dans le contrat de trafic.

16. Procédé selon l'une des revendications 11 à 15,
**caractérisé en ce que** le dépassement vers le haut de la vitesse de transmission fixée dans le contrat de trafic est détecté à l'aide de pertes de données.

17. Procédé selon l'une des revendications 11 à 16,
**caractérisé en ce que** les messages de signalisation sont insérés dans des paquets de données qui sont expédiés du second noeud final (3) au premier noeud final (2), ces paquets de données contenant une confirmation concernant les données reçues du premier noeud final (2).

18. Procédé selon l'une des revendications 11 à 17,
**caractérisé en ce que** les messages de signalisation sont expédiés au premier noeud final (2) dans des paquets de données spécialement créés.

19. Procédé selon la revendication 17 ou 18,
**caractérisé en ce que** le dépassement vers le haut de la vitesse de transmission fixée dans le contrat de trafic est signalé au moyen d'un bit spécifique placé dans l'en-tête de paquet des paquets de données.

20. Procédé selon l'une des revendications 11 à 19,
**caractérisé en ce qu'**il est appliqué dans le premier noeud final (2).
